# EUROPÄISCHE PATENTANMELDUNG

(11) **EP 2 388 972 A1**
(43) Veröffentlichungstag der Anmeldung: **23.11.2011**
(21) Anmeldenummer: 11164000.9
(22) Anmeldetag: 28.04.2011
(51) Int. Cl.: H04L 29/06, H01R 13/66

(54) **Steckverbindungssystem zum geschützten Aufbau einer Netzwerkverbindung**

(30) Priorität: 21.05.2010 DE 102010021257
(71) Anmelder: SIEMENS AKTIENGESELLSCHAFT, 80333 München (DE)
(72) Erfinder: Falk, Rainer, 85435, Erding (DE)

(57) **Zusammenfassung**

Es wird ein Steckverbindungssystem für eine Datenkommunikationsschnittstelle bestehend aus Netzwerkstecker (203) und Netzwerkbuchse (206) mit einer integrierten, von der Netzwerkkommunikation unabhängigen Authentisierungsfunktion (206,208) ausgestattet. Die Authentisierung erfolgt unabhängig von der Datenübertragung beziehungsweise der Datenkommunikation. Das Freischalten erfolgt, indem eine physikalische Verbindung zwischen den Kontakten der Netzwerkbuchse (207) und des damit verbundenen Netzwerksteckers (204) nach erfolgreicher Authentisierung hergestellt wird.

## Beschreibung

Die vorliegende Erfindung betrifft ein Steckverbindungssystem, sowie einen Netzwerkstecker und eine Netzwerkbuchse zum geschützten Aufbau einer Netzwerkverbindung, welche insbesondere geeignet sind, vorab bestimmten Wartungsfirmen beziehungsweise Wartungstechnikern Zugriff auf eine zu wartende Anlage zu gewähren.

Technische Einrichtungen erfordern in regelmäßigen Abständen oder bei fehlerhafter Funktionsweise Wartungsarbeiten. Zur Gewährleistung der Betriebssicherheit sollen die Wartungen nur durch autorisiertes Personal erfolgen. Folglich ist es notwendig, nur einem entsprechend autorisierten Personal Zugriff auf eine Wartungsfunktionalität einer Maschine oder Anlage zu erlauben. Beispielsweise kann ein Maschinenbesitzer nur Wartungspersonal Zugriff auf die zu wartende Maschine ermöglichen, welches entsprechende Schulungen durchlaufen hat. Somit kann einerseits die Sicherheit der Wartungstechniker und andererseits der korrekte Betrieb der zu wartenden Maschine gewährleistet werden.

Hierbei kommen üblicherweise mobile Wartungsgeräte, wie Notebooks oder PDAs (Personal Digital Assistant) zum Einsatz, die über eine dezentral zugängliche Schnittstelle Wartungszugang zu einem bestimmten Industriegerät, wie beispielsweise einem Zug, einem Stellwerk, einer Fertigungssteuerung oder einem Medizingerät erhalten. Die Verbindung mit der dezentral zugänglichen Schnittstelle erfolgt drahtgebunden oder drahtlos. Über den Wartungszugang können Diagnosefunktionen aufgerufen, Fehlerspeicher ausgelesen, Konfigurationseinstellungen der Industrieanlage modifiziert oder Softwareupdates eingespielt werden.

Zur Gewährung von Zugriffsrechten wird üblicherweise eine Authentizitätsprüfung vorgenommen, bei der der Nachweis einer behaupteten Identität und damit die Berechtigung zum Zugriff auf die jeweilige Wartungsschnittstelle überprüft wird. Ist die Authentizitätsprüfung erfolgreich, werden dem jeweiligen Nutzer die vorher eingeräumten Zugriffsrechte gewährt.

Die meisten bekannten Authentisierungsverfahren beruhen darauf, dass die zu authentisierende Instanz gegenüber einer Prüfinstanz zu beweisen hat, dass sie im Besitz eines Geheimnisses und/oder eines Gegenstandes ist. Das bekannteste Authentisierungsverfahren ist die Übertragung eines Passwortes, bei dem die authentisierende Instanz ein geheimes Passwort direkt an eine Prüfinstanz überträgt. Die Prüfinstanz beziehungsweise die Authentisierungsprüfeinheit überprüft dann die Richtigkeit des übertragenen Passwortes.

Bei der Verwaltung von Wartungszugängen in großen Anlagen zieht ein solches Verfahren jedoch einen erheblichen administrativen Aufwand nach sich. Insbesondere beim Einsatz von temporären Wartungstechnikern oder freien Mitarbeitern sollten die jeweiligen Wartungspasswörter nach Beendigung der Wartungsaufgabe auf dem zu wartenden System wieder geändert werden, damit künftig kein Wartungszugang für diese Mitarbeiter mehr möglich ist.

Eine weitere bekannte Möglichkeit zur sicheren Verwaltung von Wartungszugängen ist, die jeweiligen Netzwerkbuchsen für den Wartungszugang in einem physikalisch zugangsgeschützten Bereich vorzusehen. Beispielsweise kann die Netzwerkbuchse mit einer verschließbaren Wartungsklappe gesichert sein oder sich in einem verschließbaren Raum befinden. Ein solches Vorgehen ist jedoch mit Unsicherheiten verbunden, da ein physikalischer Zugangsschutz in den meisten Fällen mit wenig Aufwand umgangen werden kann. Zudem erfordert auch eine derartige Lösung einen erheblichen administrativen Aufwand, beispielsweise zum Verteilen und Einsammeln der mechanischen Schlüssel. Die Aufgabe der vorliegenden Erfindung ist es demnach, ein System zur Verwaltung und Durchsetzung von Zugriffsrechten auf Wartungsfunktionalitäten bereitzustellen, welches sicher und ohne großen Aufwand zu betreiben ist.

Diese Aufgabe wird durch ein Steckverbindungssystem, einen Netzwerkstecker und eine Netzwerkbuchse mit den Merkmalen der Ansprüche 1, 8 und 9 gelöst. Vorteilhafte Weiterbildungen der Erfindung sind in den abhängigen Ansprüchen angegeben.

Das erfindungsgemäße Steckverbindungssystem zum geschützten Aufbau einer Netzwerkverbindung umfasst einen Netzwerkstecker aufweisend eine Authentisierungseinheit und eine Netzwerkbuchse aufweisend eine Authentisierungsprüfeinheit und eine Freischalteinheit. Die Authentisierungseinheit, die Authentisierungsprüfeinheit und die Freischalteinheit weisen Mittel zum Durchführen der folgenden Schritte auf:
Ein Prüfkommando wird durch die Authentisierungsprüfeinheit an die Authentisierungseinheit übermittelt. Anhand des Prüfkommandos wird durch die Authentisierungseinheit eine Prüfantwort ermittelt und an die Authentisierungsprüfeinheit übermittelt. Die Prüfantwort wird durch die Authentisierungsprüfeinheit überprüft. Bei einer erfolgreichen Überprüfung der Prüfantwort wird eine physikalische Verbindung zwischen Netzwerkstecker und Netzwerkbuchse zum geschützten Aufbau einer Netzwerkverbindung durch die Freischalteinrichtung freigeschaltet.

Die Erfindung zeichnet sich insbesondere dadurch aus, dass eine Steckverbindung für eine Datenkommunikationsschnittstelle mit einer integrierten, von der Netzwerkkommunikation unabhängigen Authentisierungsfunktion ausgestattet ist. Bei der Datenkommunikationsverbindung handelt es sich beispielsweise um eine RJ45 oder M12 Steckverbindung. Dadurch erfüllt der Netzwerkstecker die Funktion eines Schlüssels, ohne dass jedoch ein mechanischer Schlüssel benötigt wird. Die Authentisierung erfolgt unabhängig von der Datenübertragung beziehungsweise der Datenkommunikation, so dass weder ein Wartungsgerät noch ein zu wartendes Gerät diese Funktionalität unterstützen müssen. Das Freischalten erfolgt, indem eine physikalische Verbindung zwischen den Kontakten der Netzwerkbuchse und des damit verbundenen Netzwerksteckers hergestellt wird.

In einer Weiterbildung des vorliegenden Steckverbindungssystems wird nach dem Aufbau einer Netzwerkverbindung für einen Netzwerkstecker über eine physikalisch zugangsgeschützte Netzwerkbuchse eine Identifizierungsinformation des Netzwerksteckers gespeichert. Anhand der Identifizierungsinformation wird eine Überprüfung des Netzwerksteckers an einer vorgebbaren Anzahl von weiteren Netzwerkbuchsen vorgenommen. Mit anderen Worten wird ein erfindungsgemäßes Wartungskabel mit Authentisierungsfunktion mit einem physikalisch zugangsgeschützten Wartungszugang verbunden. Dabei wird von der zu wartenden Anlage eine Identifizierungsinformation des Netzwerksteckers erfasst und gespeichert. Danach werden beispielsweise für einen gewissen vorgebbaren Zeitraum weitere Wartungszugänge derselben Anlage mit diesem Netzwerkstecker genutzt, wobei jeweils lediglich die Identifizierungsinformation überprüft wird. Dadurch kann ein nur an manchen Wartungsschnittstellen vorhandener physikalischer Zugangsschutz verwendet werden, um indirekt auch den Wartungszugang über offen zugängliche Wartungsschnittstellen abzusichern.

Gemäß einer Weiterbildung des vorliegenden Steckverbindungssystems ist der Netzwerkstecker für einen vorgebbaren Zeitraum und/oder für einen vorgebbaren Umfang von Zugriffsrechten für den Aufbau einer Netzwerkverbindung zugelassen. Demnach umfasst die Authentisierungsinformation eines Netzwerksteckers Informationen, für welche Wartungszugänge oder für welchen Zeitraum der jeweilige Netzwerkstecker berechtigt und damit verwendbar ist. Dadurch lässt sich festlegen, zu welchen Anlagen ein Wartungszugang mit einem bestimmten Netzwerkstecker möglich ist. Beispielsweise kann ein Netzwerkstecker gemäß Authentisierungsinformation für einen ganzen Industriezweig oder für einen vorgebbaren Teilnehmer eines Industriezweiges oder einen vorgebbaren Anlagentyp oder eine vorgebbare Funktionalität eines Anlagentyps umfassen. Weiterhin kann von der Authentisierungsinformation ein Zeitraum umfasst sein, in dem der Netzwerkstecker benutzt werden kann. Auf diese Weise wird sichergestellt, dass gestohlene oder verloren gegangene Wartungskabel automatisch nach Ablauf der Gültigkeitsdauer ungültig werden.

Der erfindungsgemäße Netzwerkstecker weist eine Authentisierungseinheit auf, welche zum Einsatz in einem erfindungsgemä-βen Steckverbindungssystem geeignet ist.

Die erfindungsgemäße Netzwerkbuchse weist eine Authentisierungseinheit und ein Freischalteinheit auf, welche zum Einsatz in einem erfindungsgemäßen Steckverbindungssystem geeignet sind.

Im Folgenden wird die Erfindung mit Ausführungsbeispielen anhand der beigelegten Figuren näher erläutert. Es zeigen:
Figur 1 eine schematische Darstellung eines Zugwagons mit mehreren Steuergeräten und einem Wartungszugang,
Figur 2 eine schematische Darstellung einer Steckverbindung für einen Wartungszugang gemäß der vorliegenden Erfindung,
Figur 3 in einer schematischen Darstellung ein Ablaufdiagramm zum erfindungsgemäßen Einrichten eines sicheren Wartungszugangs.

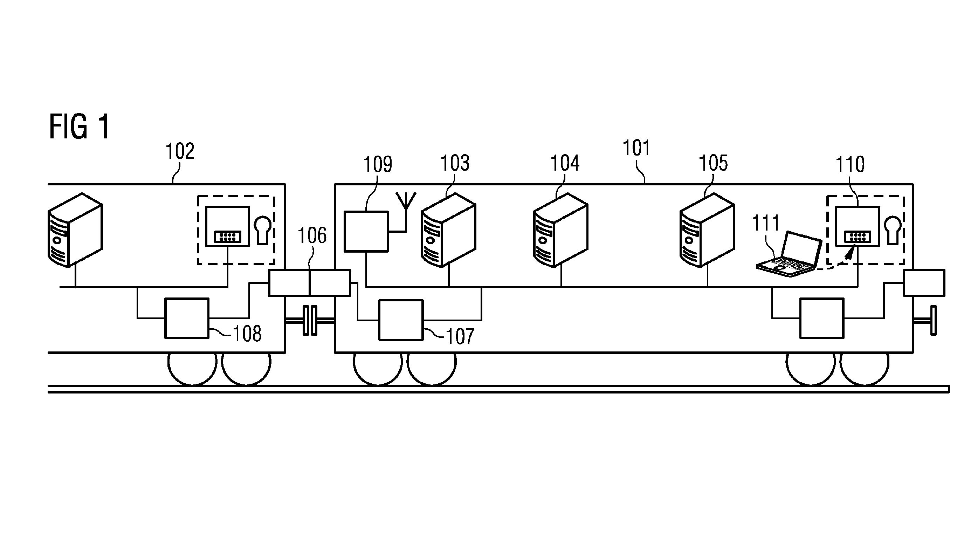

Die Figur 1 zeigt einen ersten und einen zweiten Zugwagon 101, 102, deren Steuergeräte jeweils schematisch dargestellt sind. Zu sehen ist ein Zugkontrollsystem 103, ein Passagierinfotainmentsystem 104 und ein Zugwartungssystem 105, welche untereinander über ein Netzwerk verbunden sind. Über Elektrokopplungen 106 ist das Netzwerk der einzelnen Zugwagons 101,102 miteinander gekoppelt. Weiterhin sind Gateways 107, 108 dargestellt, über die die Netzwerkkommunikation zwischen den einzelnen Zugwagons geleitet wird. Auf das Netzwerk kann von außen drahtlos oder drahtgebunden zugegriffen werden. Gezeigt ist ein drahtloser Zugang 109 als Wireless LAN Access Point und ein drahtgebundener Zugang 110.

Damit nun ein mobiles Wartungsgerät 111 Zugriff zum Wartungsnetz des Zuges erhält, ist in dem Zugwagon 101 ein Wartungszugang 110 vorgesehen. Dieser befindet sich hinter einer verschließbaren Wartungsklappe. Zum Anschluss des mobilen Wartungsgerätes 110 an den Wartungszugang 110 wird zunächst die Wartungsklappe mechanisch entriegelt. Hierauf wird das mobile Wartungsgerät 111 über einen Netzwerkstecker mit der Netzwerkbuchse 110 verbunden. Nach einer erfolgreichen Authentifizierung des Netzwerksteckers des mobilen Wartungsgerätes 111 wird der Wartungszugang 110 freigeschaltet, indem die physikalische Verbindung zum Datennetzwerk des Zugwagons aufgebaut wird. Auf diese Weise kann beispielsweise ein Steuergerät zur Bremssteuerung 104 durch Einspielen eines Softwareupdates gewartet werden. Für die Datenkommunikation mit dem Datennetzwerk des Zugwagons kann das mobile Wartungsgerät z.B. RS232, USB, Ethernet oder ein IP-Protokoll verwenden.

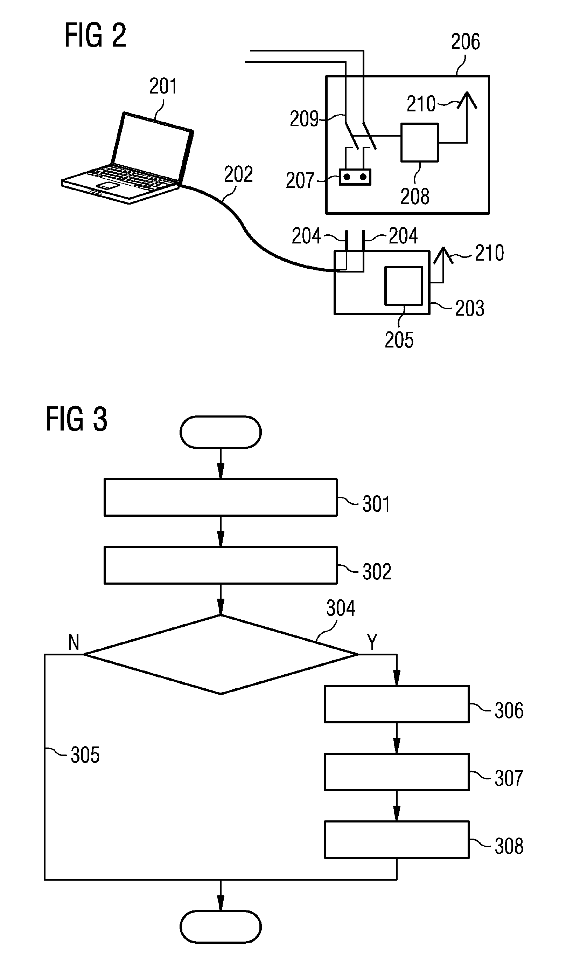

Die Figur 2 zeigt in einer schematischen Darstellung ein erfindungsgemäßes Steckverbindungssystem zum geschützten Aufbau einer Netzwerkverbindung für einen Wartungstechniker. Das mobile Wartungsgerät 201 ist über eine zweiadrige Leitung 202 mit einem Netzwerkerstecker 203 verbunden. Der Netzwerkstecker 203 weist physikalische Kontakte 204 zur Herstellung einer Datenkommunikationsverbindung und eine Authentisierungseinheit 205 auf. Die Netzwerkbuchse 206 umfasst Kontakte 207 zur Herstellung einer Verbindung zum Datennetzwerk, eine Authentisierungsprüfeinheit 208 und eine Freischalteinrichtung 209.

In diesem Ausführungsbeispiel erfolgt die Authentisierung zwischen Authentisierungseinheit und Authentisierungsprüfeinheit drahtlos über eine Funkschnittstelle 210. Bei der Funkschnittstelle 210 kann es sich beispielsweise um eine RFID-Schnittstelle handeln. Die Authentisierungsprüfeinheit 208 übermittelt ein Prüfkommando an die Authentisierungseinheit 205. Die Authentisierungseinheit 205 ermittelt auf Grundlage des Prüfkommandos eine Prüfantwort und übermittelt diese wiederum an die Authentisierungsprüfeinheit 208. Bei einer erfolgreichen Überprüfung durch die Authentisierungsprüfeinheit 208 wird die physikalische Verbindung zwischen Netzwerkstecker 203 und Netzwerkbuchse 206 durch die Freischalteinrichtung 209 durchgeschaltet. Die Freischalteinrichtung 209 ist beispielsweise mechanisch über ein Relais realisiert oder elektronisch über einen aktivierbaren Optokoppler.

In einer Variante ist statt der Funkschnittstelle 210 eine drahtgebundene Schnittstelle zur Authentisierung des Netzwerksteckers vorgesehen. Bei dieser kann es sich beispielsweise um eine I2C-Schnittstelle oder eine SPI-Schnittstelle handeln.

Die Authentisierungseinheit 205 kann bei der Bestimmung der Prüfantwort eine kryptographische Berechnung unter Verwendung eines gespeicherten kryptographischen Schlüssels vornehmen. Es kann dabei ein symmetrisches kryptographisches Verfahren, z.B. DES, AES, HMAC-SHA1 verwendet werden. Es kann ebenso auch ein asymmetrisches kryptographisches Verfahren verwendet werden, z.B. RSA, DSA, ECC-DSA. In einer Variante überträgt die Authentisierungseinheit ein digitales Zertifikat, z.B. gemäß X.509.

Die Figur 3 zeigt in einer schematischen Darstellung einen Ablauf zur sicheren Einrichtung einer Verbindung zwischen einem mobilen Wartungsgerät und einem Wartungszugang. In einem ersten Schritt wird der Netzwerkstecker mit der Netzwerkbuchse verbunden 301. Anschließend wird der Netzwerkstecker durch die Netzwerkbuchse gemäß dem oben beschriebenen Verfahren authentifiziert 302. Nach erfolgreicher Authentifizierung wird die Berechtigung des Netzwerksteckers überprüft. Verfügt der Netzwerkstecker über keine Berechtigung zum Zugang in das Wartungsnetzwerk, wird der Zugang verweigert 305.

Ist die Berechtigungsprüfung jedoch erfolgreich, wird der Zugang zum Wartungsnetzwerk freigeschaltet 306 und für eine vorgebbare Zeitspanne aufrecht erhalten 307. Nach Ablauf der vorgebbaren Zeitpanne wird der Wartungszugang gesperrt 308.

In einer anderen Variante bleibt der Zugang zum Wartungsnetzwerk freigeschaltet, bis der Netzwerkstecker aus der Netzwerkbuchse abgenommen wird.

## Patentansprüche

1. Steckverbindungssystem zum geschützten Aufbau einer Netzwerkverbindung, mit einem Netzwerkstecker aufweisend eine Authentisierungseinheit und einer Netzwerkbuchse aufweisend eine Authentisierungsprüfeinheit und eine Freischalteinheit, eingerichtet zum Durchführen der folgenden Schritte:
- Übermitteln eines Prüfkommandos durch die Authentisierungsprüfeinheit an die Authentisierungseinheit,
- Ermitteln einer Prüfantwort anhand des Prüfkommandos durch die Authentisierungseinheit und Übermitteln der Prüfantwort durch die Authentisierungseinheit an die Authentisierungsprüfeinheit,
- Überprüfen der Prüfantwort durch die Authentisierungsprüfeinheit und Freischalten einer physikalischen Verbindung zwischen Netzwerkstecker und Netzwerkbuchse zum geschützten Aufbau einer Netzwerkverbindung durch die Freischalteinheit bei einer erfolgreichen Überprüfung der Prüfantwort.

2. Steckverbindungssystem nach Anspruch 1,
wobei die Netzwerkbuchse in einem physikalisch zugangsgeschützten Bereich vorgesehen ist.

3. Steckverbindungssystem nach Anspruch 1,
wobei nach dem geschützten Aufbau einer Netzwerkverbindung für einen Netzwerkstecker über eine physikalischen zugangsgeschützte Netzwerkbuchse eine Identifizierungsinformation des Netzwerksteckers gespeichert wird,
anhand der Identifizierungsinformation eine Überprüfung des Netzwerksteckers an einer vorgebbaren Anzahl von weiteren Netzwerkbuchsen vorgenommen wird.

4. Steckverbindungssystem nach einem der Ansprüche 1 bis 3, wobei der Netzwerkstecker und die Netzwerkbuchse jeweils eine Kommunikationseinheit zur drahtgebundenen Übermittlung des Prüfkommandos und der Prüfantwort zwischen der Authentisierungseinheit und der Authentisierungsprüfeinheit aufweisen.

5. Steckverbindungssystem nach einem der Ansprüche 1 bis 3, wobei der Netzwerkstecker und die Netzwerkbuchse jeweils eine Kommunikationseinheit zur drahtungebundenen Übermittlung des Prüfkommandos und der Prüfantwort zwischen der Authentisierungseinheit und der Authentisierungsprüfeinheit aufweisen.

6. Steckverbindungssystem nach einem der Ansprüche 1 bis 5, wobei der Netzwerkstecker für einen vorgebbaren Zeitraum für den Aufbau einer Netzwerkverbindung zugelassen ist.

7. Steckverbindungssystem nach einem der Ansprüche 1 bis 6, wobei der Netzwerkstecker für einen vorgebbaren Umfang von Zugriffsrechten für den Aufbau einer Netzwerkverbindung zugelassen ist.

8. Netzwerkstecker mit einer Authentisierungseinheit, welche zum Einsatz in einem Steckverbindungssystem nach einem der Ansprüche 1 bis 7 geeignet ist.

9. Netzwerkbuchse mit einer Authentisierungsprüfeinheit und einer Freischalteinheit, welche zum Einsatz in einem Steckverbindungssystem nach einem der Ansprüche 1 bis 7 geeignet ist.
